# EUROPEAN PATENT SPECIFICATION

(11) **EP 4 319 607 B1**
(45) Date of publication and mention of the grant of the patent: **19.03.2025**
(21) Application number: 22714929.1
(22) Date of filing: 06.04.2022
(51) Int. Cl.: A47J 31/60, A47J 31/46

(54) **SYSTEM FOR CLEANING MILK DUCTS FOR A MACHINE FOR PREPARING BEVERAGES**
SYSTEM ZUR REINIGUNG VON MILCHLEITUNGEN FÜR EINE GETRÄNKEZUBEREITUNGSMASCHINE
SYSTÈME DE NETTOYAGE DE CONDUITS À LAIT POUR MACHINE DE PRÉPARATION DE BOISSONS

(30) Priority: 08.04.2021 IT 202100008768
(43) Date of publication of application: 14.02.2024
(73) Proprietor: Luigi Lavazza S.p.A., 10152 Torino (IT)
(72) Inventor: CARBONINI, Carlo, 10152 Torino (IT)
(74) Representative: Vanzini, Christian
(86) International application number: PCT/IB2022/053195
(87) International publication number: WO 2022/214983

(56) References cited:
- EP-A1- 2 353 472
- EP-A1- 3 345 518
- WO-A1-2017/155400
- DE-A1- 102013 107 077

## Description

This invention relates in general to devices for whipping milk, which devices may be used for preparing a beverage such as a cappuccino, whipped milk, and the like. As is known, these devices comprise a frothing head which is supplied via a piping connected to a milk reservoir. This piping generally comprises a flexible hose which is immersed into the interior of the milk reservoir. In some known solutions, the milk reservoir is simply a separate bottle or container which is used when preparing the beverage. Once the beverage has been distributed, the bottle or container is generally returned to a refrigerated environment to be stored.

Different cleaning systems are known in which the parts and ducts which have come into contact with the milk are periodically cleaned. In some known systems, makeshift trays are used which are filled with water and optionally detergent and into which the flexible hose that has been extracted from the milk reservoir is immersed. In other systems, parts that have come into contact with the milk are removed, and these parts are washed or disposed of.

The document EP 3 345 518 A1 discloses a cleaning system for a beverage machine.

The object of this invention is to provide a cleaning system in which it is possible to minimize the manual operations required when cleaning the machine.

This and other objects are achieved, according to the invention, by a machine for preparing beverages, wherein said machine includes
a water supply configured to supply liquid water or steam within the machine,
a frothing head for whipping milk, said frothing head comprising a milk inlet and a distribution duct for distributing a beverage, which distribution duct is arranged downstream of the milk inlet,
a milk supply piping having an inlet end which may be connected to a milk reservoir and an outlet end which is connected to the milk inlet of the frothing head, said milk supply piping comprising, at the inlet end, a flexible hose having a fixed end and a movable part configured to be immersed into the milk reservoir, and
a cleaning system including:
   - a washing water supply piping having an inlet end connected to the water supply and an outlet end,
   - a washing chamber which may be supplied with washing water provided by the washing water supply piping, it being possible to place the movable part of the flexible hose that has been extracted from the milk reservoir in said washing chamber,
      wherein, through the flexible hose, the washing water contained in the washing chamber may be conveyed to the milk inlet and to the distribution duct of the frothing head, and
      wherein the washing chamber is formed in a tray which may be coupled in a releasable manner to the body of the machine under the frothing head, a collection chamber also being formed in said tray, which collection chamber is separate from the washing chamber and configured to be arranged under the distribution duct of the frothing head.

By using a machine according to the invention, it is possible to minimize the manual operations required to clean the milk ducts. In particular, on account of the fact that the tray has a separate collection chamber and washing chamber, the washing cycle may be carried out in a simple manner, since it is possible to manage the washing of the ducts and the discharge of the washing residues using just one means.

Further features and advantages of the invention will become clear from the detailed description that follows, given purely by way of non-limiting example and with reference to the accompanying drawings, in which:
Fig. 1 is an electro/fluidic diagram of a machine for preparing beverages, comprising a cleaning system according to a first embodiment of the invention,
Fig. 2 is a sectional view showing the front of the machine in Fig. 1,
Fig. 3 and 4 are electro/fluidic diagrams of a machine for preparing beverages, comprising a cleaning system according to a second and a third embodiment of the invention, and
Fig. 5 is a sectional view showing the front of the machine in Fig. 4.

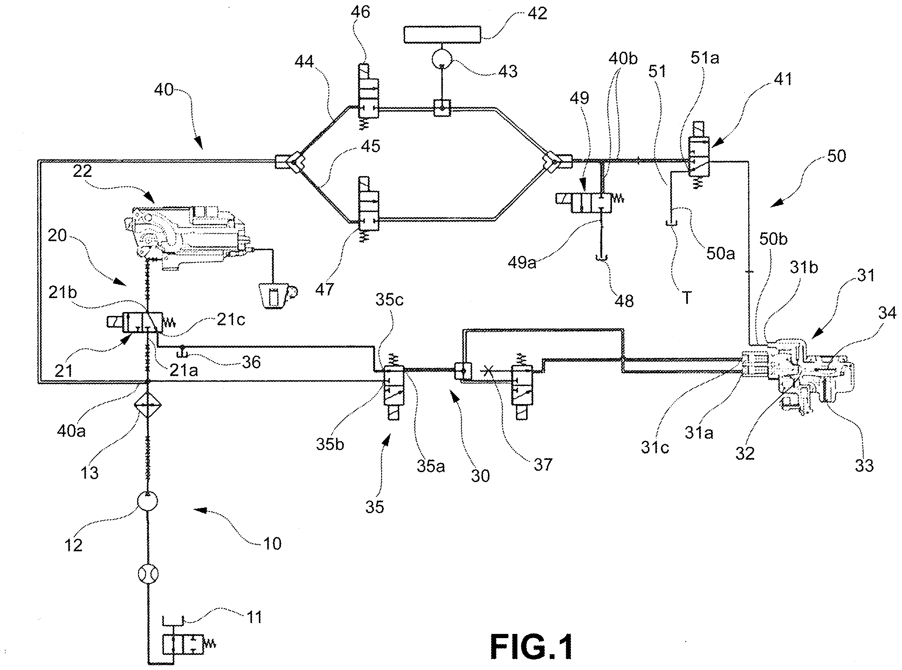

Fig. 1 shows, as a whole, a machine for preparing beverages, in particular coffee, cappuccino and the like. In general, this invention covers both domestic machines and machines used in business or public environments, as well as vending machines.

This machine comprises a water supply 10 configured to supply liquid water or steam within the machine. In the example shown, inside the machine, the water supply comprises a water supply system 10 of the kind known per se. The water supply system 10 typically comprises a reservoir 11, an electric pump 12 which draws the water from the reservoir 11, and a heating device 13 supplied with the water provided by the pump 12. The heating device 13 is a so-called instantaneous heating device, otherwise known as a flow heater or transit heater, and is used to generate the steam or hot water flow necessary for the system to operate. In general, other means for generating steam that are of a type known to a person skilled in the art may be provided. According to an embodiment which is not shown, the machine may not have a proper water supply system. In this case, the water supply may comprise a fitting or connector for directly connecting to the mains water.

A brewing line 20, a frothing line 30 and a washing water supply line or piping 40 branch off downstream of the heating device 13. The brewing line 20 comprises a brewing valve 21 having an inlet 21a connected to the heating device 13 and an outlet 21b connected to a brewing unit 22 of a kind known per se, in such a way that a flow of steam is supplied to this unit 22 for the preparation of a brewed beverage, for example a coffee-based beverage. The brewing valve 21 may be switched between a first position in which the brewing unit 22 is in fluid communication with the heating device 13, and a second position in which the brewing unit 22 is isolated from the heating device 10. The brewing valve 21 may also comprise an outlet 21c which is connected to a water discharge receptacle and which, in the second position, is connected to the outlet 21b to allow water to be discharged from the brewing unit 21.

The frothing line 30 comprises a frothing head 31 of a kind known per se. The frothing head 31 comprises a steam-driven jet pump 32 and a distribution duct 33 for distributing a beverage, which distribution duct is arranged downstream of the jet pump 32. The frothing head 31 comprises a steam inlet 31a through which the steam produced by the heating device 13 may be injected into the jet pump 32 in order to generate a steam jet. A frothing chamber 34 of the kind known per se, into which the steam/milk/air mixture is conveyed in order to create an emulsion, and a subsequent dispensing duct may be arranged downstream of the jet pump 31 and upstream of the distribution duct 33.

The frothing line 30 also comprises a steam valve 35 comprising an outlet 35a connected to the steam inlet 31a of the frothing head 31, and an inlet 35b connected to the outlet of the heating device 13. The steam valve 35 may be switched between a first position in which the frothing head 31 is in fluid communication with the heating device 13, and a second position in which the frothing head 31 is isolated from the heating device 13. The brewing valve 35 may also comprise an outlet 35c which is connected to a water discharge receptacle 36 and which, in the second position, is connected to the outlet 35a to allow water to be discharged from the frothing line 31.

Moreover, the frothing head 31 comprises a milk inlet 31b and an air inlet 31c through which the respective fluids may be drawn by the steam jet within the jet pump 32 in order to be mixed with the steam jet. The milk inlet 31b is connected to a milk reservoir T, in the manner described in the following. This milk reservoir T is a bottle or container which is used when preparing the beverage, and then returned to a refrigerated environment to be stored. For the purposes of this invention, the term "milk" comprises milk and derivatives of animal and plant origin (soya, rice, oat, almond, hazelnut, nuts, etc.) and preparations based on milk together with other ingredients (cocoalchocolate, fruit).

The frothing line 30 may also comprise further valves and fluidic components arranged between the steam valve 35 and the frothing head 31. These further valves and fluidic components do not form the subject of this invention and will therefore not be described further. It should be noted here that the frothing line 30 comprises an air supply 37 which may be put in fluid communication with the air inlet 31c of the frothing head 31 in order to suck air into the jet pump 32.

The milk inlet 31b of the frothing head 31 is connected to the milk reservoir T via a milk supply line or piping 50. The milk supply piping 50 has an inlet end 50a which may be connected to the milk reservoir T and an outlet end 50b which is connected to the milk inlet 31b of the frothing head 31. At the inlet end 50a, the milk supply piping 50 typically comprises a flexible hose 51 which has a fixed end 51a, in particular an end fixed to the body of the machine for preparing beverages, and a movable part configured to be immersed into the milk reservoir T.

The machine for preparing beverages also comprises a cleaning system which may be actuated to clean the milk supply piping 50 and the frothing head 31.

This cleaning system includes the washing water supply line or piping 40. The washing water supply piping 40 has an inlet end 40a connected to the water supply system 10, more specifically to the outlet of the heating device 13, and an outlet end 40b.

The cleaning system also comprises a detergent supply 42 connected to the washing water supply piping 40. In the example shown, a pump 43, for example a peristaltic pump, is associated with the detergent supply 42, which pump is configured to draw the detergent from the detergent supply 42 and introduce it into the washing water supply piping 40. This configuration is not essential to the purposes of the invention, and other means for dosing the detergent, for example a dosing valve system, may be provided instead of the pump. According to further embodiments, the detergent may be provided without using a pump or valve means, for example by falling or gravity. According to other embodiments, the detergent may be provided in a solid form (tablets) by means of a specific dispenser.

In the example shown, the washing water supply piping 40 comprises a cleaning branch 44 and a rinse branch 45 arranged in parallel. The cleaning branch 44 is connected to the detergent supply 42. A shut-off valve is associated with each of these branches, which valves are denoted by 46 and 47, respectively, in order to selectively fluidically connect or disconnect the relevant branch to/from the water supply system 10. This dual-line configuration has the advantage of providing additional guarantees in terms of reducing the risk of milk contamination as a result of the washing processes described in the following. Nevertheless, it is possible to design a configuration in which the washing water supply piping 40 comprises a single branch configured as the cleaning branch 44 or, in the event that the machine does not have a detergent supply, as the rinse branch 45.

The cleaning system also comprises a washing chamber 48 which may be supplied with washing water provided by the washing water supply piping 40. As will be described in the following, the movable part of the flexible hose 51 that has been extracted from the milk reservoir T may be placed in the washing chamber 48.

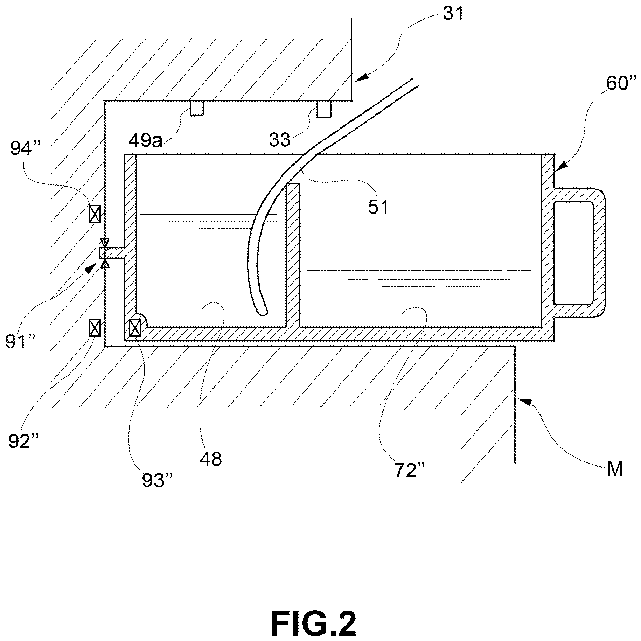

With reference again to Fig. 2, the washing chamber 48 is formed in a tray 60" which may be coupled in a releasable manner to the body of the machine M, under the frothing head 31. A collection chamber 72" is also formed in this tray 60", which collection chamber is separate from the washing chamber 48 and configured to be arranged under the distribution duct 33 of the frothing head 31.

The cleaning system also comprises washing valve means arranged at the outlet end 40b of the washing water supply piping 40. These washing valve means are also arranged between the flexible hose 51 and the frothing head 31, and may be switched between a first position in which the flexible hose 51 is isolated from the milk inlet 31b of the frothing head 31, and a second position in which the flexible hose 51 is in fluid communication with the milk inlet 31 of the frothing head 31. In the first position of the washing valve means, the washing water supply piping may also be fluidically connected to the washing chamber 48 by means of the washing valve means, for washing the movable part of the flexible hose 51 placed in the washing chamber 48. Through the flexible hose 51, the washing water contained in the washing chamber 48 may be conveyed to the milk inlet 31b and thus, by means of the jet pump 32, to the distribution duct 33 of the frothing head 31.

In the example shown, the aforementioned valve means comprise a first washing valve 41 which connects the outlet end 40b of the washing water supply piping 40 and the flexible hose 51 to the milk inlet 31b of the frothing head 31, and a second washing valve 49 which connects the outlet end 40b of the washing water piping 40 to the washing chamber 48. The first washing valve 41 may be switched between a first position in which the flexible hose 51 is isolated from the milk inlet 31b of the frothing head 31 and the outlet end 40b of the washing water piping 40 is in fluid communication with the milk inlet 31b of the frothing head 31, and a second position in which the flexible hose 51 is in fluid communication with the milk inlet 31b of the frothing head 31 and the outlet end 40b of the washing water piping 40 is isolated from the milk inlet 31b of the frothing head 31. The second washing valve 49 may be switched between a first position in which the washing chamber 48 is in fluid communication with the outlet end 40b of the washing water piping 40, and a second position in which the washing chamber 48 is isolated from the outlet end 40b of the washing water piping 40. In Fig. 1 and 2, reference sign 49a indicates an outlet of the second washing valve 49, which outlet is positioned on the front of the machine M in a position such that, when the tray 60" is fixed to the machine M, the outlet 49a is above the washing chamber 48.

In the example shown, the fixed end 51a of the flexible hose 51 is connected to the first washing valve 41. When the machine for preparing beverages is in the working condition, the movable part of the flexible hose 51 is immersed into the milk reservoir T while the first washing valve 41 is in its second position, and therefore allows the frothing head 31 to suck the milk from the reservoir T, through the flexible hose 51 and the milk supply piping 50, as a result of the action of the jet pump 32.

The device described above also comprises an electronic control unit operatively connected to the various devices of the machine for preparing beverages. The electronic control unit is configured to control and coordinate the aforesaid components in a predetermined manner according to instruction signals provided to the control unit.

A semi-automatic cleaning process will now be described which allows all of the ducts and components that have come into contact with the milk to be cleaned.

Firstly, a user fixes the tray 60" to the machine M and positions the movable part of the flexible hose 51 in the washing chamber 48.

By acting on a user interface of the machine M, the user starts the cleaning process. The electronic control unit of the machine then actuates the distribution of water comprising detergent to the washing chamber 48; the water is delivered by the pump 12 of the water supply system 10 and mixes with the detergent in the washing water supply piping 40. The washing water is then introduced into the washing chamber 48 through the second washing valve 49, which is in a position that puts the outlet 49a in fluid communication with the washing water supply piping 40. The fluid communication with the flexible hose 51 and with the frothing head 31 is blocked.

The electronic control unit then switches the valve means 41, 49 so as to establish the fluid communication between the flexible hose 51 and the frothing head 31, and block the fluid communication between the washing water supply piping 40 and the washing chamber 48. The electronic control unit also activates the frothing line so that steam is delivered to the frothing head 31 through the steam inlet 31a thereof. The jet pump 32 of the frothing head 31 then sucks up the washing water comprising detergent present in the washing chamber 48, through the flexible hose 51 and the rest of the milk supply piping 50. The steam with the washing water and the detergent are then discharged into the collection chamber 72" of the tray 60", through the distribution duct 33. The washing cycle described above may be carried out more than once in order to increase the effectiveness thereof.

In a possible duct rinsing phase, the process is analogous to that described above, except for the fact that the washing water supply piping 40 is now configured to supply water without detergent. In the event that the washing water supply piping 40 has a cleaning branch 44 and a rinse branch 45, as shown in Fig. 1, this involves enabling the rinse branch 45 and disabling the cleaning branch 44 via the respective valves 46 and 47. If the washing water supply piping has just one branch, the electronic control unit may simply block the detergent supply to the washing water supply piping 40. The rinsing cycle described above may be carried out more than once in order to increase the effectiveness thereof.

An alternative cleaning process may be provided which allows all of the ducts that have come into contact with the milk to be cleaned, with the exception of the flexible hose 51.

By acting on the user interface of the machine M, the user starts the cleaning process. The electronic control unit of the machine then actuates the distribution of water comprising detergent to the valve means 41, 49; the water is delivered by the pump 12 of the water supply system 10 and mixes with the detergent in the washing water supply piping 40. The valve means 41, 49 are in a position that puts the washing water supply piping 40 in fluid communication with the external part of the milk supply piping 50 and the frothing head 31. The fluid communication with the flexible hose 51 and with the washing chamber 48 is blocked.

The washing water comprising detergent then reaches the frothing head 31 through the milk supply piping 50. The washing water and the detergent are then discharged into the collection chamber 72" through the distribution duct 33.

A possible duct rinsing phase is analogous to the washing phase described above, except for the fact that the washing water supply piping 40 is now configured to supply water without detergent.

In terms of monitoring the rinse phase, a detergent presence sensor may be provided to detect the residual presence of detergent in the rinse water. This sensor may be a turbidity sensor, for example a conductive sensor, and may be associated with the tray 60" or positioned at the end 40b of the washing water supply piping 40 or in the milk supply piping 50. On the basis of a signal provided by the detergent presence sensor, the control unit of the machine may be configured to control the number of rinse cycles required to completely remove the detergent from the ducts through which the milk is intended to pass. According to a further embodiment, a detergent presence sensor may be integrated on the pump 43 for the detergent.

In order to fix the tray 60" to the body of the machine M, a mechanical affixing system, for example a clip-on system, may be provided, which system is denoted by 91" in Fig. 2. A presence sensor 92" may also be provided, which presence sensor is configured to detect the presence or absence of the tray 60" and provide a corresponding signal. In the example shown, the presence sensor 92" is designed as a magnetic sensor, in particular a reed sensor, which is configured to detect a magnet 93" mounted on the tray 60". A level sensor 94", for example an optical or capacitive sensor, may also be provided, which level sensor is configured to detect the level of liquid within the washing chamber 48 and provide a corresponding signal.

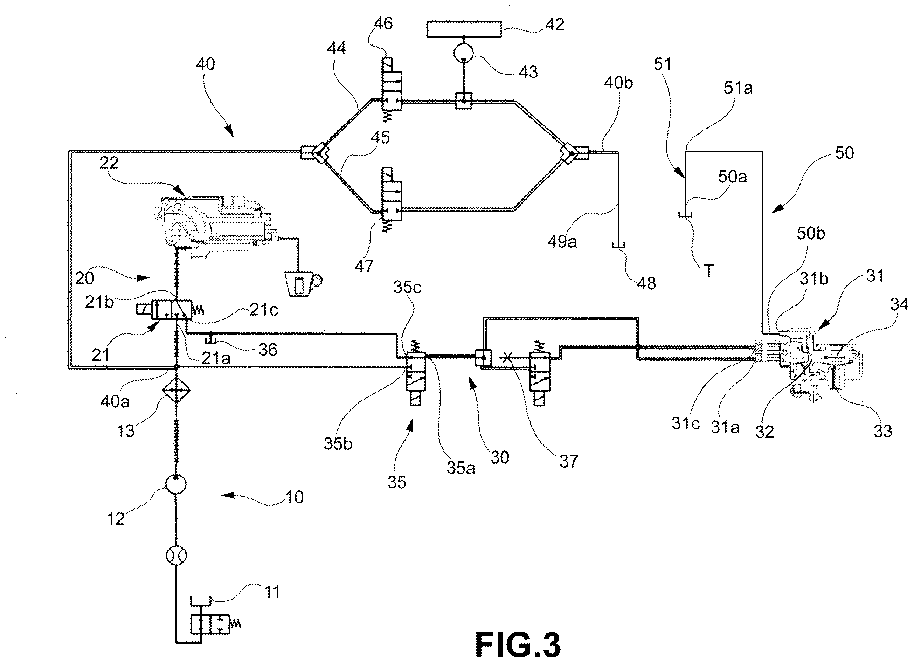

Fig. 3 shows a machine for preparing beverages, comprising a second embodiment of the cleaning system. Elements corresponding to those of the preceding embodiment have been assigned the same reference signs; these elements will not be described again.

The embodiment in Fig. 3 differs from the preceding embodiment in that valve means are not provided at the outlet end 40b of the washing water supply line or piping 40. Moreover, there is no direct communication between the washing water supply line 40 and the milk supply line 50, but only indirect communication through the washing chamber 48 when the flexible hose 51 is placed inside the washing chamber 48. In the embodiment in Fig. 3, the removable tray 60" described above may be used; it is understood that what is shown and described in relation to Fig. 2 also applies to the embodiment in Fig. 3. In this case, the outlet 49a is directly connected to the outlet end 40b of the washing water supply system 40.

In the embodiment in Fig. 3, only the cleaning cycle described above may be carried out, in which the flexible hose 51 inserted in the washing chamber 48 is used.

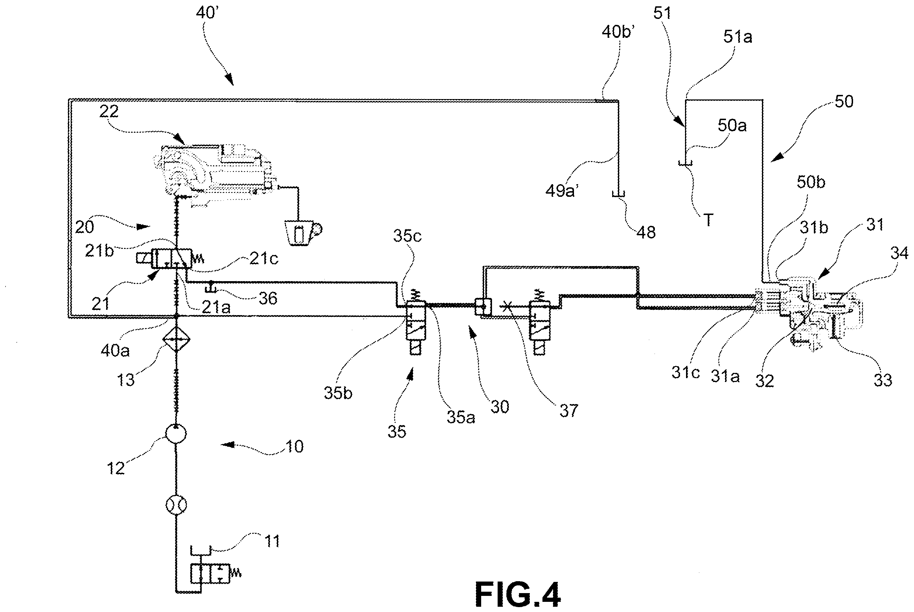

Fig. 4 shows a machine for preparing beverages, comprising a third embodiment of the cleaning system. Elements corresponding to those of the preceding embodiment have been assigned the same reference signs; these elements will not be described again.

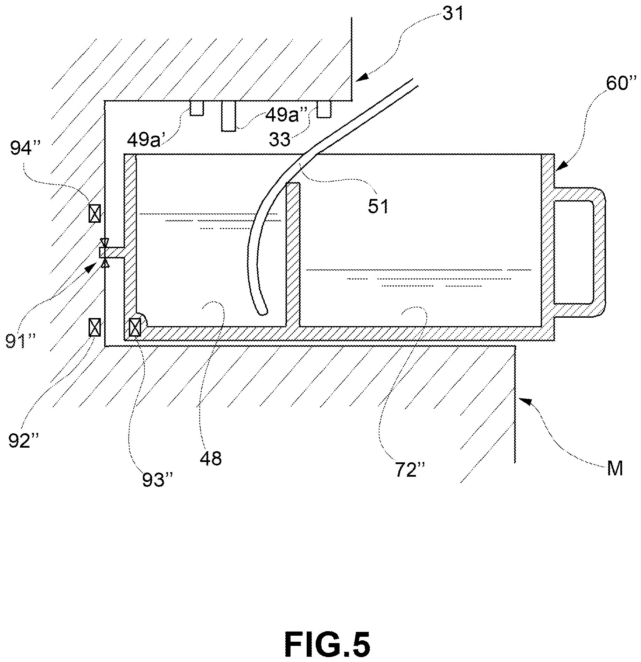

The embodiment in Fig. 4 is analogous to that in Fig. 3, but differs therefrom in that a specific washing water supply line is not provided, and instead a water supply line 40' is provided, in particular for the distribution of hot water which is normally provided for preparing infusions such as tea and herbal tea. For the purposes of this invention, the water supply line 40' therefore performs the function of distributing the washing water, and will therefore be described as such for ease. The washing water supply line 40' has an inlet end 40a' connected to the water supply system 10, more specifically to the outlet of the heating device 13, and an outlet end 40b'. The washing water supply line 40' does not have an integrated detergent supply. Therefore, if provided, the detergent is introduced directly into the collection chamber 48, which also acts as a mixing chamber. The detergent may be provided using means that are entirely separate from the machine M. Alternatively, a detergent supply system that is separate from the washing water supply line 40' and designed to introduce the detergent into the collection chamber 48 may be provided in the machine itself. This latter configuration is in fact shown in Fig. 5, where 49a" denotes an outlet of the detergent supply system, which outlet is positioned on the front of the machine M in a position such that, when the tray 60" is fixed to the machine M, the outlet 49a" is above the washing chamber 48. The outlet 49a' may also be seen in Fig. 5, which outlet is directly connected to the outlet end 40b' of the washing water supply system 40', analogously to the embodiment in Fig. 3. According to a further embodiment, the detergent may be introduced directly into the washing chamber 48 manually by the user, in liquid or solid (tablet) form.

Naturally, without prejudice to the principle of the invention, the embodiments and the details of construction may vary widely with respect to that which has been described and illustrated purely by way of non-limiting example, without thereby departing from the scope of protection of the invention as defined in the appended claims.

## Claims

1. A machine (M) for preparing beverages, wherein said machine includes
a water supply (10) configured to supply liquid water or steam within the machine,
a frothing head (31) for heating and whipping milk, said frothing head comprising a milk inlet (31b) and a distribution duct (33) for distributing a hot beverage, which distribution duct is arranged downstream of the milk inlet (31b),
a milk supply piping (50) having an inlet end (50a) connectable to a milk reservoir (T) and an outlet end (50b) connected to the milk inlet (31b) of the frothing head (33), said milk supply piping comprising, at the inlet end (50a), a flexible hose (51) having a fixed end (51a) and a movable part configured to be immersed into the milk reservoir (T), and
a cleaning system including:
- a washing water supply piping (40; 40') having an inlet end (40a; 40a') connected to the water supply (10) and an outlet (49a; 49a'),
- a washing chamber (48) suppliable with washing water provided by the outlet (49a; 49a') of the washing water supply piping (40), in said washing chamber there being placeable the movable part of the flexible hose (51) that has been extracted from the milk reservoir (T) in said washing chamber,
wherein, through the flexible hose (51), the washing water contained in the washing chamber (48) is conveyable to the milk inlet (31b) and to the distribution duct (33) of the frothing head (31), and
wherein the washing chamber (48) is formed in a tray (60") couplable in a releasable manner to the body of the machine (M) under the frothing head (31), a collection chamber (72") also being formed in said tray, which collection chamber is separate from the washing chamber (48) and configured to be arranged under the distribution duct (33) of the frothing head (31).

2. The machine of claim 1, wherein the washing chamber (48) is configured to be arranged under the outlet (49a; 49a').

3. The machine of claim 1 or 2, further comprising mechanical affixing means (91") provided for securing the tray (60") to the machine (M) under the frothing head (31).

4. The machine of any of the preceding claims, further comprising a presence sensor (92") configured to provide a signal indicative of the presence or absence of the tray (60'').

5. The machine of any of the preceding claims, further comprising a level sensor (94") configured to provide a signal indicative of the level of liquid within the washing chamber (48).

6. The machine of any of the preceding claims, wherein the frothing head (31) further comprises a steam-driven jet pump (32), said jet pump being connected upstream to the milk inlet (31b) and downstream to the distribution duct (33).

7. The machine of any of the preceding claims, further comprising a detergent supply (42) connected to the washing water supply piping (40).

8. The machine of claim 7, wherein the washing water supply piping (40) comprises
a cleaning branch (44) and a rinse branch (45) arranged in parallel, the cleaning branch (44) being connected to the detergent supply (42), and
switching valve means (46, 47) configured to selectively put the cleaning branch (44) or the washing branch (45) in fluid communication with the water supply system (10).

9. The machine of any of the preceding claims, further comprising
washing valve means (41, 49) arranged at the outlet end (40b) of the washing water supply piping (40), said washing valve means also being arranged between the flexible hose (51) and the frothing head (31), and being switchable between a first position in which the flexible hose (51) is isolated from the milk inlet (31b) of the frothing head (31), and a second position in which the flexible hose (51) is in fluid communication with the milk inlet (31b) of the frothing head (31),
wherein, in the first position, the washing water supply piping (40) is further fluidically connectable to the washing chamber (48) via said washing valve means (41, 49), for washing the movable part of the flexible hose (51) placed in the washing chamber (48).

10. The machine of claim 9, wherein, with the washing valve means (41, 49) in the first position, the washing water is conveyable into the washing chamber (48) via the washing water supply piping (40) and, with the washing valve means (41, 49) in the second position, the washing water contained in the washing chamber (48) is conveyable to the milk inlet (31b) and to the distribution duct (33) of the frothing head (31).

11. The machine of claim 7 or 8, further comprising a detergent presence sensor configured to detect the presence of detergent in the water and provide an indicative signal, a control unit being configured to control a rinse operation of the machine (M) on the basis of said signal.

## Patentansprüche

1. Getränkezubereitungsmaschine (M), wobei die Maschine umfasst
eine Wasserversorgung (10), die konfiguriert ist, flüssiges Wasser oder Dampf innerhalb der Maschine zu versorgen,
einen Aufschäumkopf (31) zum Erhitzen und Aufschlagen von Milch, wobei der Aufschäumkopf einen Milcheinlass (31b) und einen Verteilerrohrleitung (33) zum Verteilen eines Heißgetränks umfasst, wobei der Verteilerrohrleitung stromabwärts des Milcheinlasses (31b) angeordnet ist,
eine Milchversorgungsleitung (50) mit einem Einlassende (50a), das mit einem Milchbehälter (T) verbindbar ist, und einem Auslassende (50b), das mit dem Milcheinlass (31b) des Aufschäumkopfs (33) verbunden ist, wobei die Milchversorgungsleitung am Einlassende (50a) einen flexiblen Schlauch (51) umfasst, der ein Festende (51a) und einen beweglichen Teil aufweist, der konfiguriert ist, in den Milchbehälter (T) eingetaucht zu werden, und
ein Reinigungssystem, umfassend:
- eine Reinigungswasserversorgungsleitung (40; 40') aufweisend ein Einlassende (40a; 40a'), das mit der Wasserversorgung (10) verbunden ist, und einen Auslass (49a; 49a'),
- eine Reinigungskammer (48), die mit Reinigungswasser, das aus dem Auslass (49a; 49a') der Reinigungswasserversorgungsleitung (40) geliefert wird, versorgt werden kann, wobei der bewegliche Teil des flexiblen Schlauchs (51), der aus dem Milchbehälter (T) herausgenommen wurde, in die Reinigungskammer angeordnet werden kann,
wobei das Reinigungswasser, das in der Reinigungskammer (48) enthalten ist, durch den flexiblen Schlauch (51) zu dem Milcheinlass (31b) und zu der Verteilerrohrleitung (33) des Aufschäumkopfs (31) geleitet werden kann, und
wobei die Reinigungskammer (48) in einer Wanne (60") ausgebildet ist, die lösbar mit dem Körper der Maschine (M) unter dem Aufschäumkopf (31) koppelbar ist, wobei eine Sammelkammer (72") ebenfalls in der Wanne ausgebildet ist, wobei die Sammelkammer von der Reinigungskammer (48) getrennt ist und konfiguriert ist, unter der Verteilerrohrleitung (33) des Aufschäumkopfs (31) angeordnet zu werden.

2. Maschine nach Anspruch 1, wobei die Reinigungskammer (48) konfiguriert ist, unter dem Auslass (49a; 49a') angeordnet zu werden.

3. Maschine nach Anspruch 1 oder 2, ferner umfassend mechanische Befestigungsmittel (91"), die zum Befestigen der Wanne (60") an der Maschine (M) unter dem Aufschäumkopf (31) vorgesehen sind.

4. Maschine nach einem der vorhergehenden Ansprüche, ferner umfassend einen Anwesenheitssensor (92"), der konfiguriert ist, ein Signal zu liefern, das die Anwesenheit oder Abwesenheit der Wanne (60") anzeigt.

5. Maschine nach einem der vorhergehenden Ansprüche, ferner umfassend einen Füllstandssensor (94"), der konfiguriert ist, ein Signal zu liefern, das den Flüssigkeitsfüllstand in der Reinigungskammer (48) anzeigt.

6. Maschine nach einem der vorhergehenden Ansprüche, wobei der Aufschäumkopf (31) ferner eine dampfbetriebene Strahlpumpe (32) umfasst, wobei die Strahlpumpe stromaufwärts mit dem Milcheinlass (31b) und stromabwärts mit der Verteilerrohrleitung (33) verbunden ist.

7. Maschine nach einem der vorhergehenden Ansprüche, ferner umfassend eine Reinigungsmittelversorgung (42), die mit der Reinigungswasserversorgungsleitung (40) verbunden ist.

8. Maschine nach Anspruch 7, wobei die Reinigungswasserversorgungsleitung (40) umfasst:
einen Reinigungszweig (44) und einen Spülzweig (45), die parallel angeordnet sind, wobei der Reinigungszweig (44) mit der Reinigungsmittelversorgung (42) verbunden ist, und
Umschaltventilmittel (46, 47), die konfiguriert sind, den Reinigungszweig (44) oder den Reinigungszweig (45) wahlweise in Fluidverbindung mit dem Wasserversorgungssystem (10) zu bringen.

9. Maschine nach einem der vorhergehenden Ansprüche, ferner umfassend:
Reinigungsventilmittel (41, 49), die an dem Auslassende (40b) der Reinigungswasserversorgungsleitung (40) angeordnet sind, wobei die Reinigungsventilmittel ferner zwischen dem flexiblen Schlauch (51) und dem Aufschäumkopf (31) angeordnet sind und zwischen einer ersten Position, in der der flexible Schlauch (51) von dem Milcheinlass (31b) des Aufschäumkopfs (31) isoliert ist, und einer zweiten Position, in der der flexible Schlauch (51) in Fluidverbindung mit dem Milcheinlass (31b) des Aufschäumkopfs (31) steht, umschaltbar sind,
wobei in der ersten Position die Reinigungswasserversorgungsleitung (40) ferner über die Reinigungsventilmittel (41, 49) fluidisch mit der Reinigungskammer (48) verbindbar ist, um den beweglichen Teil des flexiblen Schlauchs (51), der in der Reinigungskammer (48) angeordnet ist, zu reinigen.

10. Maschine nach Anspruch 9, wobei mit den Reinigungsventilmitteln (41, 49) in der ersten Position, das Reinigungswasser in die Reinigungskammer (48) über die Reinigungswasserversorgungsleitung (40) geleitet werden kann und mit den Reinigungsventilmitteln (41, 49) in der zweiten Position das in der Reinigungskammer (48) enthaltene Reinigungswasser zu dem Milcheinlass (31b) und zu der Verteilerrohrleitung (33) des Aufschäumkopfs (31) geleitet werden kann.

11. Maschine nach Anspruch 7 oder 8, ferner umfassend einen Reinigungsmittel-Anwesenheitssensor, der konfiguriert ist, die Anwesenheit von Reinigungsmittel im Wasser zu erfassen und ein entsprechendes Signal zu liefern, eine Steuereinheit, die konfiguriert ist, den Spülvorgang der Maschine (M) basierend auf dem Signal zu steuern.

## Revendications

1. Machine (M) de préparation de boissons, ladite machine comprenant
une alimentation en eau (10) configurée pour fournir de l'eau liquide ou de la vapeur à l'intérieur de la machine,
une tête de moussage (31) destinée à chauffer et fouetter le lait, ladite tête de moussage comprenant une entrée de lait (31b) et un conduit de distribution (33) pour distribuer une boisson chaude, lequel conduit de distribution est agencé en aval de l'entrée de lait (31b),
une tuyauterie d'alimentation en lait (50) ayant une extrémité d'entrée (50a) connectable à un réservoir de lait (T) et une extrémité de sortie (50b) connectée à l'entrée de lait (31b) de la tête de moussage (33), ladite tuyauterie d'alimentation en lait comprenant, à l'extrémité d'entrée (50a), un tuyau flexible (51) ayant une extrémité fixe (51a) et une partie mobile configurée pour être immergée dans le réservoir de lait (T), et
un système de nettoyage comprenant:
- une tuyauterie d'alimentation en eau de lavage (40; 40') ayant une extrémité d'entrée (40a; 40a') connectée à l'alimentation en eau (10) et une sortie (49a; 49a'),
- une chambre de lavage (48) pouvant être alimentée avec de l'eau de lavage fournie par la sortie (49a; 49a') de la tuyauterie d'alimentation en eau de lavage (40), ladite chambre de lavage étant apte à recevoir la partie mobile du tuyau flexible (51) qui a été extraite du réservoir de lait (T),
dans laquelle, par le biais du tuyau flexible (51), l'eau de lavage contenue dans la chambre de lavage (48) est acheminable vers l'entrée de lait (31b) et vers le conduit de distribution (33) de la tête de moussage (31), et
dans laquelle la chambre de lavage (48) est formée dans un bac (60") pouvant être couplé de manière amovible au corps de la machine (M) sous la tête de moussage (31), une chambre de collecte (72") étant également formée dans ledit bac, ladite chambre de collecte étant séparée de la chambre de lavage (48) et configurée pour être disposée sous le conduit de distribution (33) de la tête de moussage (31).

2. Machine selon la revendication 1, dans laquelle la chambre de lavage (48) est configurée pour être disposée sous la sortie (49a; 49a').

3. Machine selon la revendication 1 ou 2, comprenant en outre des moyens de fixation mécanique (91") prévus pour fixer le bac (60") à la machine (M) sous la tête de moussage (31).

4. Machine selon l'une quelconque des revendications précédentes, comprenant en outre un capteur de présence (92") configuré pour fournir un signal indicatif de la présence ou de l'absence du bac (60").

5. Machine selon l'une quelconque des revendications précédentes, comprenant en outre un capteur de niveau (94") configuré pour fournir un signal indicatif du niveau de liquide dans la chambre de lavage (48).

6. Machine selon l'une quelconque des revendications précédentes, dans laquelle la tête de moussage (31) comprend en outre une pompe à jet entraînée par la vapeur (32), ladite pompe à jet étant connectée en amont à l'entrée de lait (31b) et en aval au conduit de distribution (33).

7. Machine selon l'une quelconque des revendications précédentes, comprenant en outre une alimentation en détergent (42) connectée à la tuyauterie d'alimentation en eau de lavage (40).

8. Machine selon la revendication 7, dans laquelle la tuyauterie d'alimentation en eau de lavage (40) comprend
une branche de nettoyage (44) et une branche de rinçage (45) disposées en parallèle, la branche de nettoyage (44) étant connectée à l'alimentation en détergent (42), et
des moyens de vanne de commutation (46, 47) configurés pour mettre sélectivement en communication fluidique la branche de nettoyage (44) ou la branche de lavage (45) avec le système d'alimentation en eau (10).

9. Machine selon l'une quelconque des revendications précédentes, comprenant en outre
des moyens de vanne de lavage (41, 49) disposés à l'extrémité de sortie (40b) de la tuyauterie d'alimentation en eau de lavage (40), lesdits moyens de vanne de lavage étant également disposés entre le tuyau flexible (51) et la tête de moussage (31), et étant commutables entre une première position dans laquelle le tuyau flexible (51) est isolé de l'entrée de lait (31b) de la tête de moussage (31), et une seconde position dans laquelle le tuyau flexible (51) est en communication fluidique avec l'entrée de lait (31b) de la tête de moussage (31),
dans laquelle, en première position, la tuyauterie d'alimentation en eau de lavage (40) peut en outre être connectée fluidiquement à la chambre de lavage (48) via lesdits moyens de vanne de lavage (41, 49), afin de laver la partie mobile du tuyau flexible (51) placée dans la chambre de lavage (48).

10. Machine selon la revendication 9, dans laquelle, avec les moyens de vanne de lavage (41, 49) en première position, l'eau de lavage est acheminable dans la chambre de lavage (48) via la tuyauterie d'alimentation en eau de lavage (40), et avec les moyens de vanne de lavage (41, 49) en seconde position, l'eau de lavage contenue dans la chambre de lavage (48) est acheminable vers l'entrée de lait (31b) et vers le conduit de distribution (33) de la tête de moussage (31).

11. Machine selon la revendication 7 ou 8, comprenant en outre un capteur de présence de détergent configuré pour détecter la présence de détergent dans l'eau et fournir un signal indicatif, une unité de commande étant configurée pour commander une opération de rinçage de la machine (M) sur la base dudit signal.
